# EUROPEAN PATENT SPECIFICATION

(11) **EP 1 069 793 B1**
(45) Date of publication and mention of the grant of the patent: **26.04.2006**
(21) Application number: 99901952.4
(22) Date of filing: 08.02.1999
(51) Int. Cl.: H04B 7/185, H04Q 7/38

(54) **MOBILE COMMUNICATION UNIT AND METHOD OF SWITCHING RADIO COMMUNICATION SYSTEMS**
MOBILE KOMMUNIKATIONSEINHEIT SOWIE VERFAHREN ZUM WECHSELN VON FUNKKOMMUNIKATIONSSYSTEMEN
UNITE DE COMMUNICATION MOBILE ET PROCEDE DE COMMUTATION DE SYSTEME DE COMMUNICATION RADIO

(43) Date of publication of application: 17.01.2001
(73) Proprietor: MITSUBISHI DENKI KABUSHIKI KAISHA, Tokyo 100-8310 (JP)
(72) Inventor: HAZAMA, Kaori, Mitsubishi Denki Kabushiki Kaisha, Tokyo 100-8310 (JP)
(74) Representative: Popp, Eugen
(86) International application number: PCT/JP1999/000519
(87) International publication number: WO 2000/048414

(56) References cited:
- WO-A-96/28947
- WO-A-98/03027
- WO-A-98/51103
- GB-A- 2 313 257
- JP-A- 8 023 574
- JP-A- 8 275 223
- JP-A- 8 501 430
- DRUCKER E H ET AL: "INTEGRATION OF MOBILE SATELLITE AND CELLULAR SYSTEMS" PROCEEDINGS OF THE INTERNATIONAL MOBILE SATELLITE CONFERENCE,XX,XX, 1993, pages 119-124, XP000607473

## Description

### BACKGROUND OF THE INVENTION

### Technical Field

The present invention relates to a mobile communication apparatus and a radio communication system switching method, and more particularly to a radio communication apparatus for selecting at least one radio communication channel from a plurality of radio communication channels provided by two or more communication systems, and also relates to a radio communication system switching method for switching between these radio communication systems.

### Background Art

Generally, a radio communication system provides a multiplicity of radio communication channels, and for this reason, a mobile communication apparatus such as a portable telephone has a channel selection section for selecting a communication channel, whereby the mobile communication apparatus communicates through a communication channel selected by this channel selection section.

When determining a communication channel, the channel selection section is required to perform a channel search in such a manner that the communication channels capable of being selected are sequentially selected thereby to find a usable communication channel, that is, a channel capable of receiving the radio signal transmitted from the system side.

The communication channel is defined by frequency and time slot in the case of a portable telephone of the TDMA (time division multiple access) system. While, the communication channel is defined by frequency and spreading code in the case of a portable telephone of the CDMA (code division multiple access) system. The information for defining the communication channel is called channel information. For example, in the system employing the GSM (global system for mobile communications) system which is a TDMA system, several hundred kinds of communication channels can be selected in accordance with a combination of frequencies and time slots.

Accordingly, in the case where the channel switching is required, communication channels are sequentially selected from a channel list in which selectable communication channels are defined. And, the channel states of the selected communication channels are checked (channel search). When a communication channel in a good channel state is found, this communication channel is acquired. Thereafter, if the channel state of the acquired communication channel becomes degraded, the same channel search as the aforesaid channel search is executed again. In such a channel search, since communication channels are sequentially selected from the channel list, there is a case where a communication channel in a good channel state can be found through checking only a channel state of one communication channel, but there is also a case where a communication channel in a good channel state can be found for the first time through checking channel states of several hundreds of communication channels.

Although time required for the checking operation of the channel state differs depending on the communication system, in some cases, a long time may be required for this checking operation. If a long time is required for the channel search, there arises a problem that a user can not immediately use the radio communication apparatus for communication, even if the user exists within a service area capable of receiving the radio signal from the system.

In order to solve such problems, a system has been proposed where a system (for example, an earth station) transmits to the mobile communication apparatus a radio signal including information as to the communication channels of peripheral cells. For example, in the GSM system, the channel information on the radio signal (a cell corresponding to this radio signal is referred to as a serving cell) transmitted from the earth station monitored by the mobile communication apparatus includes the frequency information on cells (referred to as neighboring cells) adjacent to the serving cell. If the frequency information on such neighboring cells is obtained in advance, even when the mobile communication apparatus moves out of the serving area, the next communication channel can be acquired by a channel search in a shorter time by performing the channel search only as to such neighboring cells, thus less time is required than a sequential channel search performed on the basis of the channel list.

Here, let us consider the case of a mobile communication apparatus which is capable of selecting and using one of a plurality of communication channels provided by two or more than two radio communication systems (which is a so-called dual mode apparatus). The channel search by the dual-mode apparatus is conducted at the time of channel switching within the same system, and also at the time of system switching.

"Channel switching within the same system" is herein defined as selecting another communication channel which is provided by the radio communication system providing the communication channel currently being captured. On the other hand, "system switching" means to select a communication channel provided by a radio communication system (hereinafter referred to as an "after-switch system") which is different from the radio communication system (hereinafter referred to just as a "before-switch system") providing the communication channel currently being captured.

In the case of the channel switching within the same system, the mobile communication apparatus can raise its channel searching speed by receiving information as to the peripheral cells in advance from the system side communication apparatus, just as the case of the GSM system. On the other hand, in the case of the system switching, although it is required that the mobile communication apparatus conducts a channel search as to the after-switch system, it cannot receive any information concerning the after-switch system from the before-switch system, which is different from the after-switch system. For this reason, a sequential search in accordance with a channel list required, so that in the case where a long time is required for channel searching, it is quite difficult to carry out a prompt system switching.

The present invention is provided for solving the problems aforementioned, and it is an object of the present invention to provide a radio communication system switching method for enabling to reduce the time required for performing a channel search operated at the time of system switching between different radio systems, and thus enabling a prompt system switching, and also to provide a mobile communication apparatus which is capable of implementing this method.

### DISCLOSURE OF THE INVENTION

A radio communication system switching method, and apparatus for performing the method on, according to the present invention, comprises the steps and means for performing the steps of:
a first extracting step for extracting the positional information of a radio zone provided by a first radio communication system from a radio signal received within the radio zone which is currently serving a mobile station, for which a channel is to be selected.

Storing the positional information of two or more radio zones, which are provided by a second radio communication system in association with the channel information of the respective radio zones.

Calculating the overlapped area of each of the radio zones stored by the storing step with the radio zone extracted by the first extracting step.

Selecting a radio communication channel which is provided by the second radio communication system which generated the largest overlapped area obtained by the area calculating step. Then proceeding to the second radio communication system which generated the next largest overlapped area obtained by said area calculating step in a stepwise manner, until a good radio communication channel is found.

Further preferred embodiments to the method and apparatus are given by the dependent claims.

### BRIEF DESCRIPTION OF THE DRAWINGS

Fig. 1 is a schematic illustration showing one example of the system arrangement including a mobile communication apparatus MS according to a first embodiment of the present invention.
Fig. 2 is a block diagram showing an example of the arrangement of a mobile communication apparatus MS shown in Fig. 1.
Fig. 3 is a table showing an example of the data arrangement of the channel list 6B shown in Fig. 2.
Fig. 4 is an illustration schematically showing a cell in the cellular method as an example of the radio zone.
Fig. 5 is a table showing one example of the data arrangement stored in the positional information storage section 3B shown in Fig. 2.
Fig. 6 is an illustration showing one example of the first and second positional information, which is to be used for explaining into details the operation of the positional information retrieve section 5B shown in Fig. 2.
Fig. 7 is a flow chart of steps s100 to s109 showing an example of the operation of the terrestrial-system unit UB shown in Fig. 2, wherein the operation at the time of system switching from the satellite communication system to the terrestrial communication system is explained.
Fig. 8 is a flow chart of steps 5200 to S202 showing an example of the operation of the satellite-system unit UA shown in Fig. 2, wherein the operation at the time of system switching from the terrestrial communication system to the satellite communication system is explained.
Fig. 9 is a schematic illustration showing one example of the system arrangement including the mobile communication apparatus MS according to a second embodiment of the present invention.
Fig. 10 is an illustration showing one example of the first and second positional information, which is used for explaining the operation of the positional information retrieve section 5B shown in Fig. 2.
Fig. 11 is a schematic diagram showing one example of the system arrangement of the mobile communication apparatus MS according to a third embodiment of the present invention.
Fig. 12 is a schematic diagram showing one example of the system arrangement of the mobile communication apparatus MS according to a fourth embodiment of the present invention.
Fig. 13 is a diagram showing an example of the data arrangement of the positional information storage section 3NB shown in Fig. 12.
Fig. 14 is an exemplary view for explaining the operation of the cycle error calculation section 90B shown in Fig. 12.
Fig. 15 is a flow chart of steps S300 to S313 showing an example of the operation of the satellite-system unit UB shown in Fig. 12, wherein the operation at the time of system switching from the terrestrial communication system to the satellite communication system is explained.
Fig. 16 is a schematic diagram showing one example of the system arrangement including the mobile communication apparatus MS according to a fifth embodiment of the present invention.

### BEST MODE FOR CARRYING OUT THE INVENTION

### (First Embodiment)

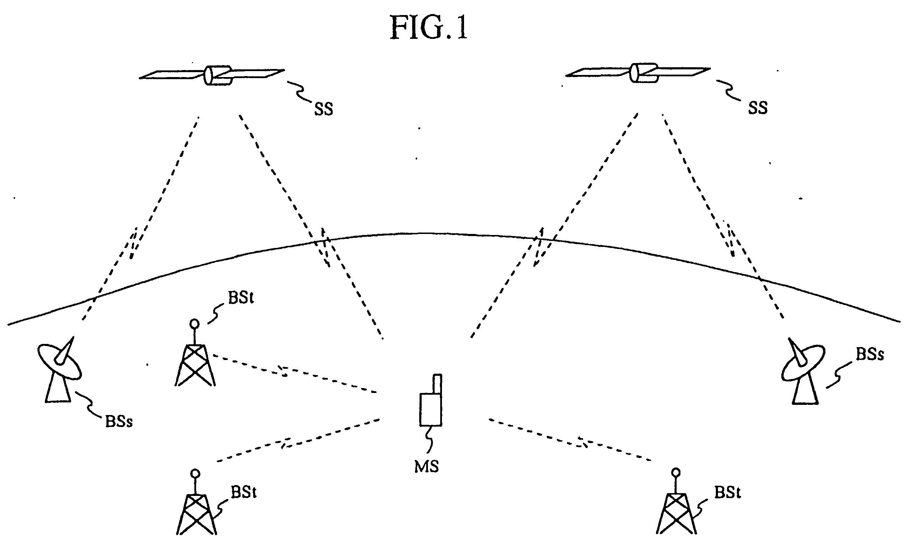

Fig. 1 is a schematic illustration showing one example of the system arrangement including a mobile communication apparatus according to the present invention. In the figure, reference characters SS and BSs denote respectively a communication satellite and an earth station, configuring thereby a satellite communication system, whereas reference character BSt denotes an earth station configuring a terrestrial communication system. The communication satellite SS and the earth station BSt form respectively a plurality of radio zones (not shown) on the land surface, wherein a mobile communication apparatus MS can receive radio signals within each of these radio zones, and can select and use one of the radio communication channels provided by the communication satellite (satellite channels) and those provided by the terrestrial communication system (terrestrial channels).

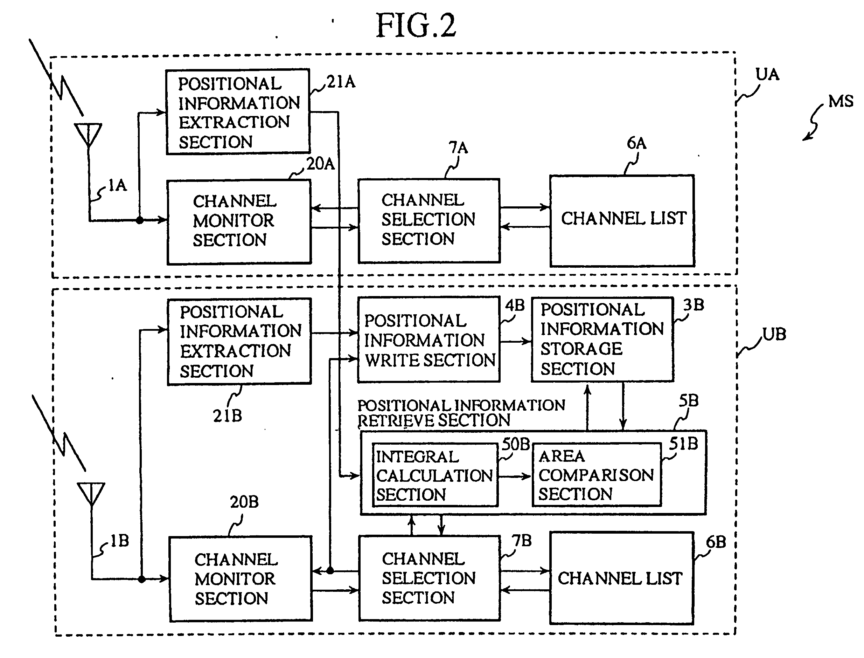

Fig. 2 is a block diagram showing an example of the arrangement of a mobile communication apparatus MS according to the present invention, wherein the apparatus MS is composed of a unit UA for capturing satellite channels (hereinafter may be referred to just as the "satellite-system unit" UA) and the other unit UB for capturing terrestrial channels (hereinafter may be referred to just as the "terrestrial-system unit" UB). It is to be noted that in the present embodiment, the satellite communication system corresponds to the first radio communication system (before-switch system) and the terrestrial communication system corresponds to the second radio communication system (after-switch system).

The satellite-system unit UA is composed of an antenna section 1A, a channel monitor section 20A, a positional information extraction section 21A, a channel list 6A and a channel selection section 7A. In this configuration, the antenna section 1A receives a radio signal from the communication satellite SS which is the system side communication apparatus, and the channel monitor section 20A monitors the channel state of the communication channel on the basis of the thus received radio signal. The positional information extraction section 21A extracts the positional information of the radio zone from the received signal, and outputs the extracted positional information to the terrestrial-system unit UB. The channel list 6A defines all the selectable satellite channels in advance, and the channel selection section 7A selects a satellite channel on the basis of the information stored in the channel list 6A.

The terrestrial-system unit UB is composed of an antenna section 1B, a channel monitor section 20B, a positional information extraction section 21B, a positional information storage section 3B, a positional information write section 4B, a positional information retrieve section 5B, a channel list 6B and a channel selection section 7B. The antenna section 1B receives a radio signal from the earth station BSt which is the system side communication apparatus, and the channel monitor section 20B monitors the channel state of the communication channel on the basis of the thus received radio signal. The positional information extraction section 21B extracts the positional information of the radio zone from the received signal, and the thus extracted positional information of the radio zone is written into the positional information storage section 3B by the positional information write section 4B and maintained therein. The channel list 6B defines all the selectable terrestrial channels in advance, and the channel selection section 7B selects a terrestrial channel on the basis of the result of the information retrieving operation within the positional information storage 3B carried out by the positional information retrieve section 5B, or the information stored in the channel list 6A.

The channel lists 6A and 6B are storage sections for storing the communication channels selectable by the respective channel selection sections 7A and 7B, wherein channel information of the satellite channels are stored in the channel list 6A, and channel information of the terrestrial channels are stored in the channel list 6B. Here, the "channel information" is herein defined as the information required for capturing a communication channel, that is, the frequency and the time slot in the case of the TDMA system, and the frequency and the spreading code in the case of the CDMA system.

Usually, the channel lists 6A and 6B may be implemented by a nonvolatile storage means such as a ROM, EPROM, flash memory or the like. Alternately, the channel lists may be stored in a volatile storage means such as a DRAM, SRAM or the like in which the channel information is copied as the need arises from the nonvolatile storage means such as a hard disk, optical disk, ROM, EPROM, flash memory or the like.

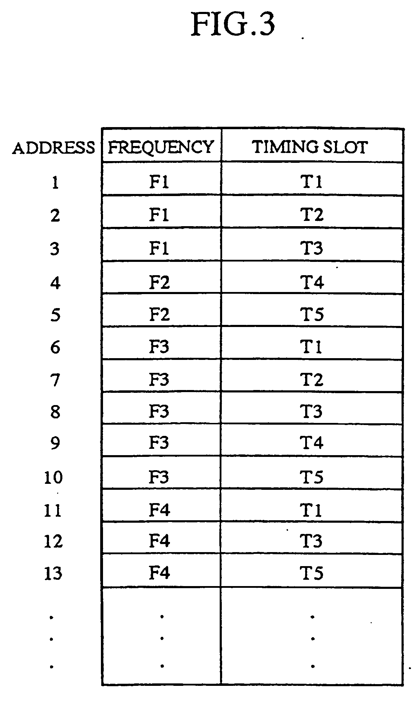

Fig. 3 is a table showing an example of the data forming the channel list 6B. Here, a case in which the communication method is of the TDMA is taken as an example. The channel list 6B defines selectable several hundred kinds of communication channels formed by the combination of the carrier frequencies of the radio signal [F1, F2, F3 ....] and the time slots [T1, T2, T3 ....] which represent the synchronous timing. For example, in the address 1, the communication channel [F1 - T1] (indicating that the frequency is F1 and the time slot is T1, and similar indication hereinafter) is defined, while in the address 10, the communication channel [F3 - T5] is defined.

The channel selection sections 7A and 7B are means each for selecting a communication channel in the channel switching operation at the time of call-waiting, wherein each means not only selects a channel during a channel switching within one radio communication system, but selects during a switching between the terrestrial communication system and the satellite communication system.

The channel selection section 7A usually selects a communication channel on the basis of the channel list 6A, while the channel selection section 7B selects a communication channel on the basis of the channel list 6B or an output of the positional information retrieve section 5B.

In other words, the channel selection section 7A generates an address signal and supplies it to the channel list 6A to select a communication channel, irrespectively whether the system switching is from the terrestrial communication system to the satellite communication system or the system switching is just within the satellite system. Thereby the channel information is read, and the thus read-out channel information is sent to the channel monitor section 20A.

On the other hand, the channel selection section 7B sends a request for retrieval with respect to the positional information retrieve section 5B at the time of channel search when switching from the satellite communication system to the terrestrial communication system, and sends the channel information output from the positional information retrieve section 5B to the channel monitor section 20B. Whereas in the case of channel switching within terrestrial communication system, it generates an address signal instead of the request for retrieval and supplies it to the channel list 6B to select a communication channel, just as in the case of the channel selection section 7A, thereby to read the channel information from the channel list 6B.

The channel monitor section 20A (208) is a section for monitoring the channel state of a communication channel. The channel monitor section 20A (20B), and detects the channel state of the selected communication channel on the basis of the channel information output from the channel section 7A (7B), and sends back the result of the detection to the channel selection section 7A (7B). The monitor section 20A monitors the channel state of the satellite channel, whereas the monitor section 208 monitors the channel state of the terrestrial channel.

The detection result of the channel state is binary value or multi-value data representing a good or bad channel state of the selected communication channel. When the detected channel state does not satisfy a predetermined quality level, the channel selection section 7A (7B) further selects another communication channel (from the channel list 6A (6B). On the other hand, when the detected channel state satisfies a predetermined quality level, the channel selection section 7A (7B) captures the selected communication channel. Due to this, the mobile communication apparatus MS registers the position with respect to the system side communication apparatus that provides the captured communication channel. Further, the channel monitor section 20A (20B) continues to monitor the radio signal from the system side communication apparatus, and monitor the channel state of the currently captured communication channel.

The positional information extraction section 21A (21B) extracts the information of the communication channel on the basis of the channel information of the received signal. The information extracted from the positional information extraction section 21A (21B) contains at least positional information of the radio zone. In other words, the information extracted from the positional information extraction section 21B is output to the positional information write section 4B, whereas the information extracted from the positional information extraction section 21A is output to the terrestrial-system unit UB, and input to the positional information retrieve section 5B. In other words, the information of the terrestrial communication system is input to the positional information write section 4B, whereas the information of the satellite communication system is input to the positional information retrieve section 5B.

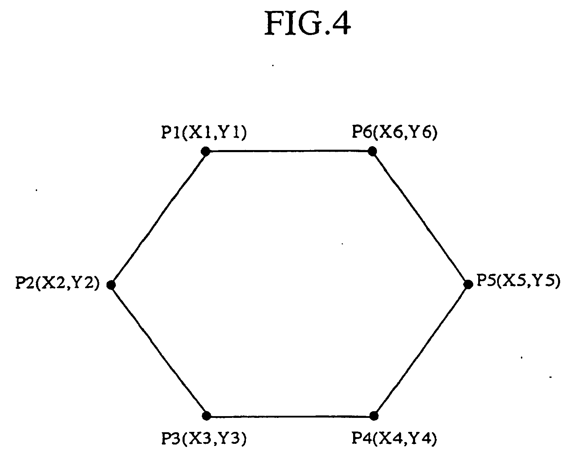

Here, the positional information of the radio zone means information representing a geographical position or a range which is covered by the same communication channel. Fig. 4 is a schematical illustration showing a cell in the cellular method as an example of the radio zone. The radio zone is called a "cell" in the cellular method, and is formed in a hexagonal shape. Therefore, in this case above, data composed of six sets of the longitude and latitude; namely X1 to X6, and Y1 to Y6, which represent each of the apexes P1 to P6, can be regarded as being the positional information of the radio zone (cell). It is to be noted that generally if the radio zone is of a polygonal shape, the positional information thereof can be represented by the longitude and latitude of each of the apexes, whereas if the radio zone is of a circular shape, the positional information thereof can be represented by the position of the center point (latitude and longitude) and the radius thereof.

The positional information write section 4B writes information of the communication channel captured at the time of call-waiting into the positional information storage section 3B, in response to the write request signal from the channel selection section 7B. That is, when a channel of a good channel state is found at the time of channel search, the channel selection section 7B sends a write request signal together with the channel information. The positional information write section 4B writes into the positional information storage section 3B the positional information output from the positional information extraction section 21B together with the channel information thereof, in response to the write request signal.

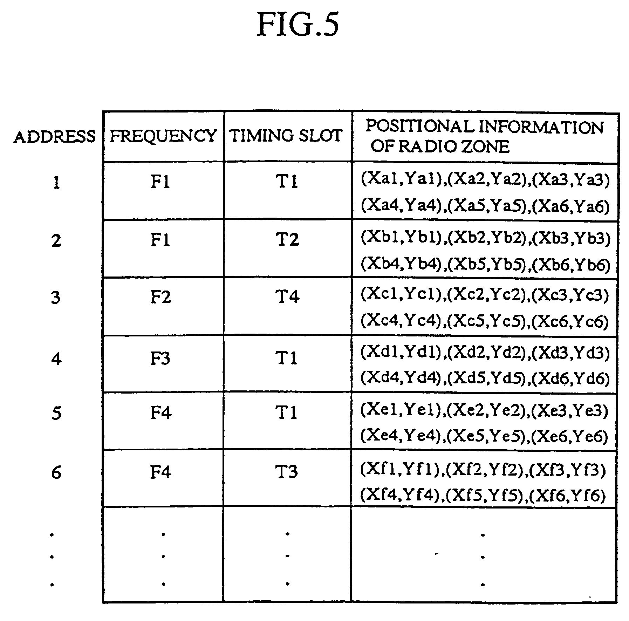

The positional information storage section 3B is a storage means, which stores the positional information of the radio zone extracted by the positional information extraction section 21B, in association with the channel information, and may be implemented by a writable storage means, that is, a volatile storage means such as a DRAM, SRAM or the like, or a nonvolatile storage means such as a flash memory, EPROM or the like. Fig. 5 is a table showing an example of the data arrangement stored in the positional information storage section 3B. For example, the positional information of the radio zone (Xa1, Ya1,), (Xa2, Ya2),.... (Xa6, Ya6) are stored in the same address (address 1), together with the channel information (F1 - T1), in association therewith.

The positional information retrieve section 5B is circuitry that retrieves the positional information stored in the positional information storage section 3B in response to a request for retrieval from the channel selection section 7B, and outputs the channel information associated with the thus retrieved communication channel. This positional information retrieve section 5B is composed of an integral calculation section 50B and an area comparison section 51B.

The integral calculation section 50B is arithmetic circuitry for calculating the area of each of the radio zones stored in the positional information storage section 3B overlapping the radio zone of the currently captured communication channel (hereinafter referred to as the "overlapped area", and the area comparison section 51B compares the thus obtained overlapped areas mutually with each other, and reads out the channel information from the positional information storage section 3B on the basis of the result of the comparison.

In the case of switching the satellite communication system to the terrestrial communication system, first the channel selection section 7B sends a request for retrieval, and then the integral calculation section 50B receives the positional information of the radio zone of the satellite channel (first positional information) from the positional information extraction section 21A. This first positional information is the positional information of the currently captured radio zone.

Thereafter, the integral calculation section 50B sequentially reads out the positional information of each of the radio zones of the terrestrial channel (second positional information) from the positional information storage section 3B. Each of the second positional information is the positional information previously extracted and stored. The integral calculation section 50B calculates the overlapped area of each of the second positional information with that of the second positional information. This overlapped area can be obtained by integral operation, but can also be obtained approximately by another calculation method.

The area comparison section 51B compares the overlapped areas thus obtained by the integral calculation section 50B mutually with each other, and reads out channel information from the positional information storage section 3B on the basis of the comparison result. In other words, the area comparison section 51B finds out a radio zone which has the largest overlapped area with the first positional information, reads out the channel information of the communication channel corresponding to this radio zone, and outputs the thus read out channel information to the channel selection section 7B.

The channel state of the communication channel of a radio zone which has the largest overlapped area obtained by the positional information retrieve section 5B is checked by the channel monitor section 20B, and as a result, if the channel state is not good, the communication channel of a radio zone which has the second largest overlapped area is retrieved by the positional information retrieve section 5B in accordance with an instruction from the channel selection section 7B. In this way, the positional information retrieve section 5B retrieves the second positional information sequentially in the order from the one that is the nearest to the first positional information from the geographical point of view (that is, in the order from the radio zone of the terrestrial channel which is the nearest to the radio zone of the satellite channel), and outputs sequentially the channel information associated with the thus retrieved positional information.

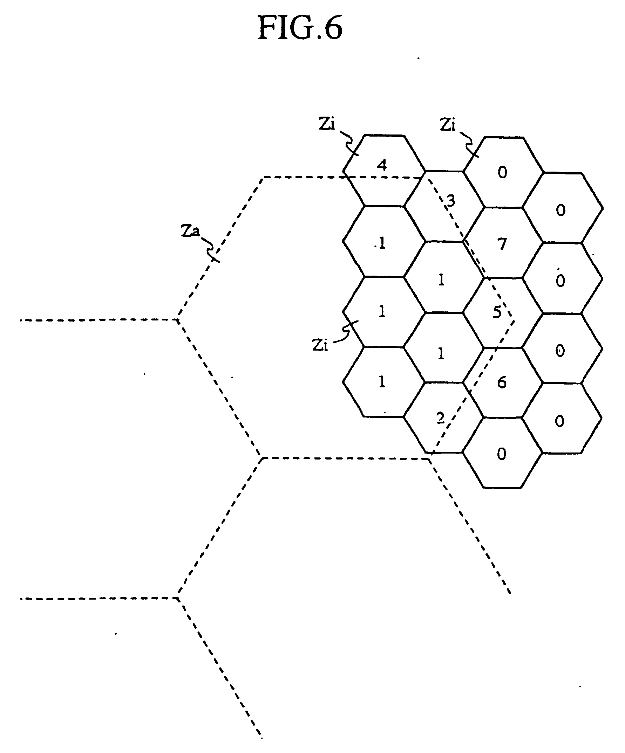

Fig. 6 is an illustration showing one example of the positional information extracted from the positional information extraction section 21A (first positional information) and the positional information stored in the positional information storage section 3B (second positional information), and showing also the operation of the positional information retrieve section 5B.

The area Za of a hexagonal shape indicated by the dashed lines shown in Fig. 6 represents a radio zone specified by the first positional information. In other words, the radio zone Za is the one that is provided by the satellite communication system, and represents a geographical area in which the same communication channel as the one provided by the communication satellite SS can be captured.

In the same figure, the areas Zi of a hexagonal shape indicated by the solid lines represent radio zones specified by the second positional information. That is, the radio zones Zi are those provided by the terrestrial communication system, and represent geographical areas in each of which the same communication channel can be captured.

Generally, the radio zone of the satellite communication system ranges from several tens of kilometers to several hundred of kilometers, whereas the radio zone of the terrestrial communication system ranges only up to several tens of kilometers or less than that, so that as shown in Fig. 6, the radio zone of the satellite communication system is larger than that of the terrestrial communication system.

The case in which a satellite channel currently captured by the mobile communication apparatus MS is switched to a terrestrial channel is explained with reference to Fig. 6. When the switching operation of the radio communication systems is conducted, first of all the channel selection section 7B sends a request for retrieval to the positional information retrieve section 5B.

The integral calculation section 50B receives the positional information of the radio zone Za from the positional information extraction section 21A in response to the retrieval request signal from the channel selection section 7B, then reads out the positional information of the radio zones Zi from the positional information storage section 3B, and finally calculates the overlapped area of each of the radio zones Zi with the area Za on the basis of the coordinates of the apexes of respective radio zones through an integral calculation method.

The area comparison section 51B compares each of the overlapped areas obtained by the integral calculation section 50B mutually with each other. The numerals given to each of the radio zones Zi in Fig. 6 indicate the result of the comparison. The radio zone with numeral "0" indicates that there is no overlapped portion therein with the radio zone Za, and the radio zone Zi having the larger overlapped area is indicated by smaller number in the order of "1, 2, 3, ...".

The area comparison section 51B first reads out from the positional information storage section 3B the channel information of the radio zone Zi whose overlapped area is the largest, and having the number "1", and sends it to the channel selection section 7B. Then, after the channel monitor section 20B detects checks the channel state of this communication channel, if the detection result shows that the channel state is not good, the channel information of the radio zone Zi which has the second largest overlapped area is output. In this way, the channel information of the terrestrial channels are sequentially provided from the area comparison section 51B in the order of smaller to larger numbers; namely 1,2,3, ..., and the channel monitor section 20B detects the channel state of the thus provided terrestrial channels sequentially. Note that the communication channel of the radio zones Zi having the same overlapped area can be selected in an arbitrary order.

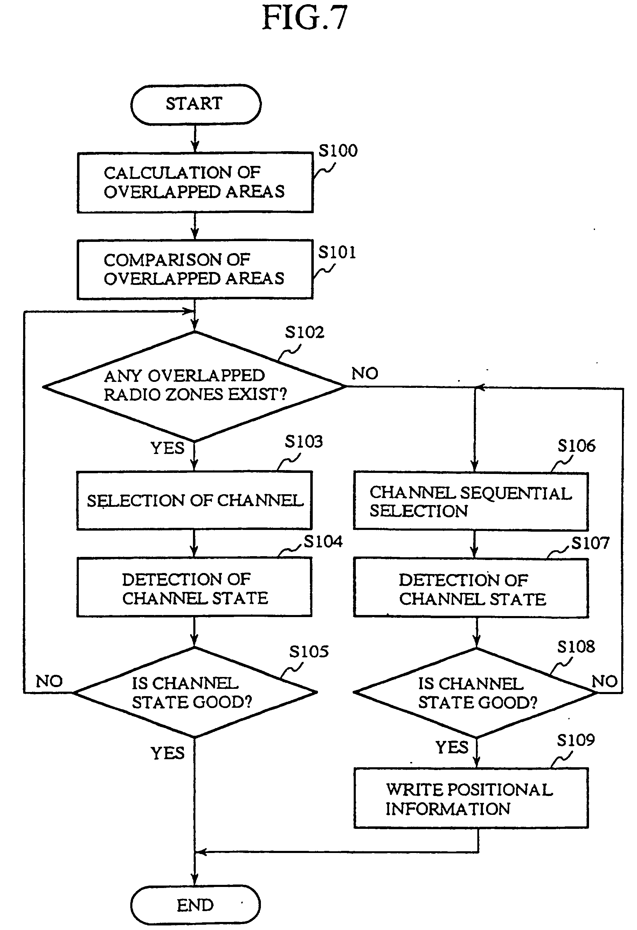

Fig. 7 is a flow chart of steps S100 to S109 showing an example of the operation of the terrestrial-system unit UB shown in Fig. 2, and showing the operation at the time of system switching from the satellite communication system to the terrestrial communication system. This process is executed when a system switching event is generated. The system switching event is issued in the case that the channel monitor section 20A has detected that the channel state of the satellite channel currently captured has degraded, or that a user has given an instruction of channel switching by operating an input means such as his input keys or the like.

First, the channel selection section 7B that has received a system switching event outputs a request for retrieval. The integral calculation section 50B then receives the first positional information from the positional information extraction section 21A in response to the retrieval request signal, and also reads out the second positional information from the positional information storage section 3B, in order to calculate the overlapped areas therebetween (S100). Thereafter, the area comparison section 51B compares the area of each of the overlapped portions mutually (S101).

After the above operation, the area comparison section 51B reads out the channel information of the communication channel of the radio zone having the largest overlapped area from the channel information storage section 3B, and the channel selection section 7B selects the communication channel output from the positional information retrieve section 5B (S103). The channel selection section 7B that has selected the communication channel sends the channel information thereof to the channel monitor section 20B, and gives an instruction to detect the channel state thereof. The channel monitor section 20B detects the channel state of this communication channel, and sends back the thus detected result to the channel selection section 7B (S104).

If the channel state is not in a good state (S105), the area comparison section 51B reads out the communication channel of a radio zone having the second largest area in response to an instruction of the channel selection section 7B, and the channel selection section 7B selects the thus read-out channel, and repeats the detecting operation of the channel state thereof (S102 - S104). On the other hand, If the channel state is good (S105), the channel selection section 7B captures that communication channel, and terminates this process (S105).

However, if it is judged in step S100 that there is no second radio zone overlapped with the first zone, the area comparison section 51B returns the information representing "no corresponding data exists" to the channel selection section 7B (S102). Further, also in the case where none of the channel state of all the second radio zones Zi overlapped with the first radio zone Za is in a good state, the area comparison section 51B returns the information representing "no corresponding data exists" (S102).

The channel selection section 7B that has received the information representing "no corresponding data exists" starts the normal channel search (S106 to S108). That is, the channel selection section 7B sequentially selects communication channels from the channel list 6B, and the channel monitor section 208 repeats detecting the channel state of the thus sequentially selected channels until it finds out and captures a communication channel having a good channel state.

When a communication channel is captured in step S108, the channel selection section 7B outputs a write request signal. The positional information write section 4B writes the channel information output from the positional information extraction section 21B into the positional information storage section 3B in response to this write request signal, and terminates the process (S109).

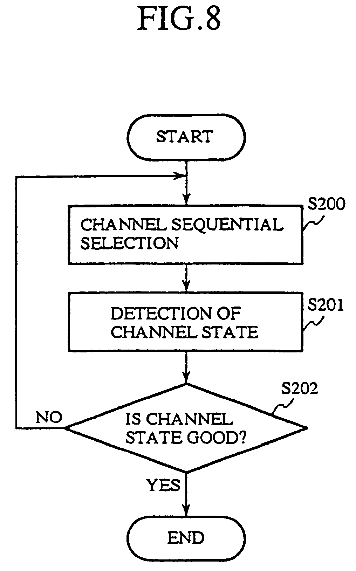

Fig. 8 is a flow chart of steps S200 to S202 showing an example of the operation of the satellite-system unit UA shown in Fig. 2, and showing the operation at the time of system switching from the terrestrial communication system to the satellite communication system. This process is executed when a system switching event is generated. The system switching event is issued in the case that the channel monitor section 20B has detected that the channel state of the terrestrial channel currently captured has degraded, or that a user has given an instruction of channel switching by operating an input means such as his input keys or the like.

The channel selection section 7A that has received a system switching event selects one of the communication channels stored in the channel list 6A. That is, the channel selection section 7A generates an address signal to the channel list 6A, and reads out the channel information from the channel list 6A (S200).

The channel selection section 7A that has selected the communication channel sends the channel information thereof to the channel monitor section 20A, and gives an instruction to detect the channel state thereof. The channel monitor section 20A detects the channel state of this communication channel, and sends back the detection result to the channel selection section 7A (S201).

If the selected channel is not in a good state (S202), the channel selection section 7A reads out another communication channel from the channel list 6B, and the channel monitor section 20A detects the channel state thereof (S200 to S201). On the other hand, if the channel state is in a good state, the channel selection section 7A captures that communication channel (S202).

According to the present embodiment, at the time of system switching, a communication channel having a radio zone which is the nearest from the geographical point of view to the radio zone of the communication channel currently captured can be selected with priority. Generally, the radio zone that had been captured before the system switching and the communication channel captured after the system switching are located geographically near to each other. For this reason, by use of the mobile communication apparatus according to the present embodiment, the time required for channel search at the time of system switching can be greatly reduced, thereby to enable a prompt system switching operation.

In the present embodiment, as to the positional information of the radio zone provided by the satellite communication system, only the latest information is used, and the information previously extracted is not used. For this reason, the satellite communication system in the present embodiment can be applied not only to the system that uses a stationary satellite whose positional information does not vary, but can be applied also to the system that uses a mobile satellite (non-stationary satellite) whose positional information varies.

Further, in the present embodiment, the present embodiment has been explained as to the case in which the satellite communication system is switched to the terrestrial communication system. However, the application of the present invention that performs system switching by use of positional information is not limited only to this case, but can be generally applied to the case in which the first radio communication system is switched to the second radio communication system which is different from the first radio communication system. For example, it can be applied to the case in which the system switching is carried out between two different terrestrial systems, and to the case in which the system switching is between two different satellite communication systems.

Further, if the unit UA is used as the terrestrial-system unit for capturing the terrestrial channels and the unit UB is used as the stationary satellite-system unit for capturing the satellite channels by way of a stationary satellite, the present invention can be applied also to the case in which the terrestrial communication system (Unit UA side) is switched to the satellite communication system (Unit UB side).

By the way, within the blocks configuring the unit UA and unit UB shown in Fig. 2, the blocks which can be shared such as the antenna sections 1A and 1B, the channel selection sections 7A and 7B and the channel lists 6A and 6B can be formed as being one configuring element. Each of the blocks other than the antenna sections 1A and 1B, the storage sections 3B, and the channel lists 6A and 6B can also be implemented by software.

### (Second Embodiment)

The first embodiment has been explained as to the case in which the satellite communication system is switched to the terrestrial communication system. However, the second embodiment of the present invention is explained as to the case in which the mobile communication apparatus MS shown in Fig. 2 performs a system switching between two different terrestrial communication systems.

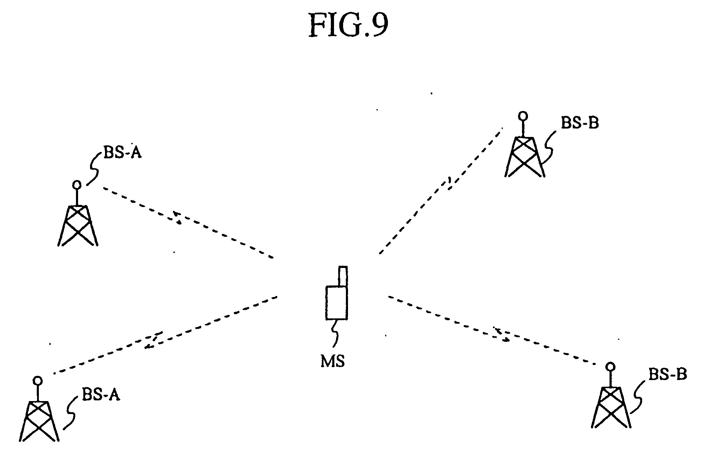

Fig. 9 is a schematic illustration showing an example of the system arrangement including the mobile communication apparatus MS according to the present invention. In the figure, BS-A and BS-B denote earth stations respectively forming different terrestrial communication systems, wherein the mobile communication apparatus MS can select and use one of the communication channels from the radio communication channels provided by these terrestrial communication systems.

Although the block diagram of the mobile communication apparatus MS is same as the one shown in Fig. 2, the units UA and UB shown in Fig. 2 are made to be channel selection units for capturing respectively different terrestrial communication systems in this embodiment, and just as the case of the first embodiment, the unit UA corresponds to the first radio communication system (before-switch system), and the unit UB corresponds to the second first radio communication system (after-switch system).

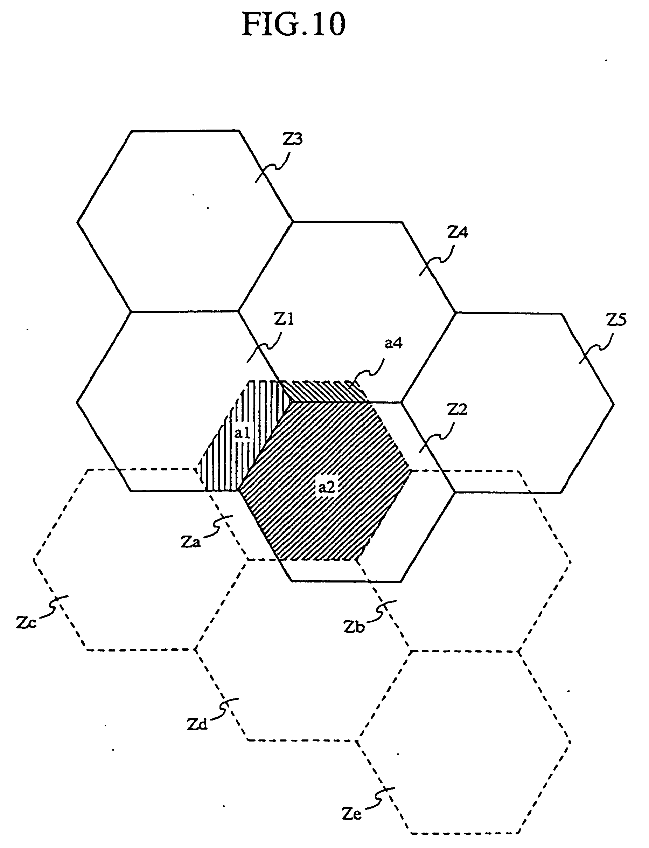

Fig. 10 is an illustration showing an example of the positional information extracted from the positional information extraction section 21A (first positional information) and the positional information stored in the positional information storage section 3B (second positional information), and showing also the operation of the positional information retrieve section 5B.

The areas Sa to Ze of a hexagonal shape indicated by the dashed lines shown in the figure represent radio zones provided by the first communication system, wherein the radio zone Za is the one specified by the first positional information. In other words, the radio zone Za is the one that corresponds to the serving cell in the GSM method. The areas Z1 to Z5 of a hexagonal shape indicated by the solid lines shown in the figure represent radio zones specified by the second positional information. In other words, the radio zones Z1 to Z5 are radio zones provided by the second communication system whose positional information are stored in the positional information storage section 3B.

The overlapped area of the radio zone Za and the radio zones Z1 to Z5 are the hatched areas a1, a2 and a4, wherein the largest area is a2 and the second largest area is a1, and there is no overlapped portion in the area Z3 and Z5.

The integral calculation section 508 calculates through integral calculation method the overlapped areas a1 to a5 (wherein a3 = a5 = 0) on the basis of each of the apexes of the radio zone Za and the radio zones Z1 to Z5 (longitude and latitude). Thereafter, the area comparison section 51B compares the overlapped areas a1 to a5 mutually with each other, and outputs the channel information of the radio zone Z2 whose overlapped area is the largest. On this occasion, if the channel state of the radio zone Z2 is not good, the area comparison section 51B outputs the channel information of the radio zone Z1 whose overlapped area is the second largest.

In this way, the channel detection is performed in the order of the zone Z2, Z1 and Z4, wherein if a communication channel whose channel state is good is found, that communication channel is captured, whereas if no communication channel whose channel state is good cannot be captured, the channel detection on the basis of the channel list 6 is carried out.

According to this second embodiment of the present invention, even in the case where the system switching is performed between different terrestrial communication systems, the present invention can be applied just as the case of the first embodiment, and the same effects can be obtained thereby.

### (Third Embodiment)

The first and second embodiments have been explained as to the case in which the present invention is applied to the system switching from one radio communication system (unit UA side) to the other radio communication system (unit UB side). However, the third embodiment of the present invention is explained as to the case in which the present invention is applied to a bi-directional system switching between two different radio communication systems.

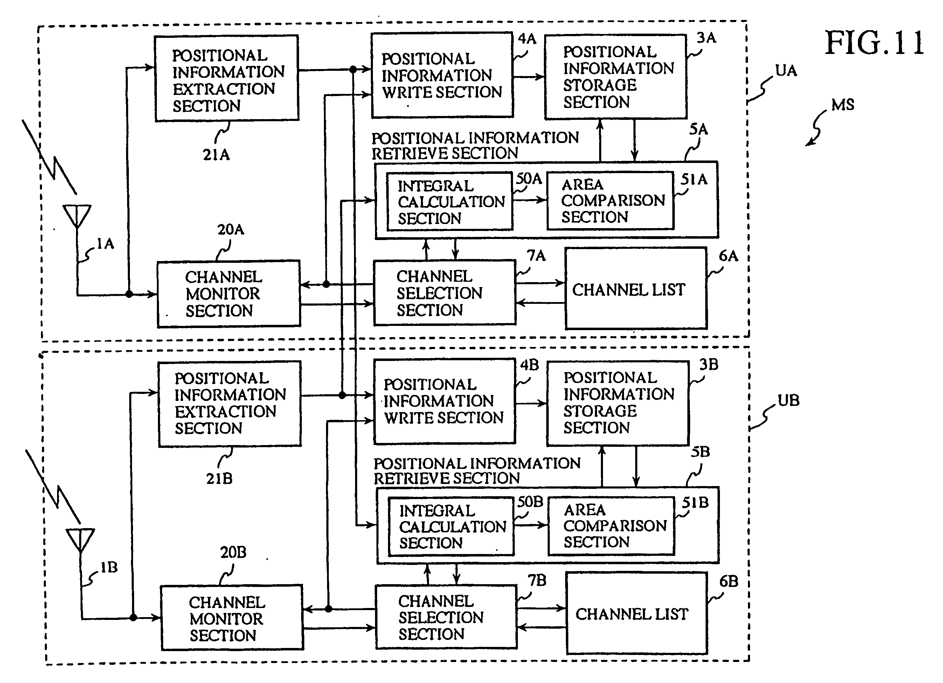

Fig. 11 is a schematic diagram showing an example of the system arrangement of the mobile communication apparatus MS according to the present invention, wherein the apparatus is composed of the satellite-system unit UA and the terrestrial-system unit UB. It is to be noted that the satellite-system unit UA is a unit for capturing the satellite channel from a stationary satellite. Same reference numerals are put to the blocks corresponding to those shown in Fig. 2 in order to omit repetition of the same explanation. Further, either "A" or "B" is attached to the end portion of the reference code of each block so as to indicate to which of the units UA and UB it belongs

The units UA and UB shown in Fig. 11 have the same configuration. The information extracted in the positional information extraction section 21A of the satellite-system unit UA is output to the positional information retrieve section 5B of the terrestrial-system unit UB, whereas the information extracted at the positional information extraction section 21B of--the satellite-system unit UB is output to the positional information retrieve section 5A of the terrestrial-system unit UA.

The system switching between the units UA and UB is carried out in the same manner as that shown in Fig. 7. That is, when switching the satellite communication system to the terrestrial communication system, the positional information retrieve section 5B performs data retrieval on the basis of the information of the satellite channel output from the positional information extraction section 21A and the information of the terrestrial channel stored in the positional information storage section 3B. On the other hand, when switching from the terrestrial communication system to the satellite communication system, the positional information retrieve section 5A performs data retrieval on the basis of the information of the terrestrial channel output from the positional information extraction section 21B and the information of the satellite channel stored in the positional information storage section 3A.

According to the present invention, one of the two different radio communication systems can be arbitrarily made a first radio communication system (before-switch system). The other system can be made a second radio communication system (after-switch system). That is, when performing bi-directional system switching between two different radio communication systems, a channel search using mutual positional information can be carried out. Therefore, the time required for system switching in both directions can be reduced.

The present embodiment has been explained as to the case in which the present invention is applied to the system switching from the satellite communication system and the terrestrial communication system. However, the present invention can be applied generally to any case of system switching between different radio communication systems. For example, it can be applied to the case in which the system switching is performed between terrestrial communication systems. Further, in the case of the satellite communication system using a stationary satellite, it can also be applied to the system switching between different satellite communication systems.

### (Fourth Embodiment)

There are two types of communication satellites; one is a stationary satellite rotating around the earth along the stationary orbit (a circular orbit 35,786 Km above the earth) in synchronization with the rotation cycle of the earth, and the other is a mobile satellite (non-stationary satellite) rotating along an orbit lower than the stationary orbit at a shorter rotation cycle.

In the system in which a radio zone is formed by the stationary satellite (stationary satellite communication system), the radio zone does not vary, whereas in the system in which a radio zone is formed by the mobile satellite (mobile satellite communication system), the radio zone varies in accordance with the time lapse, so that the positional information thereof also varies.

For this reason, although the first embodiment has been explained as to the case in which the mobile satellite communication system is used as the first radio communication system (before- switch system), the present embodiment is explained as to the case in which the mobile satellite communication system is used as the second radio communication system (after-switch system).

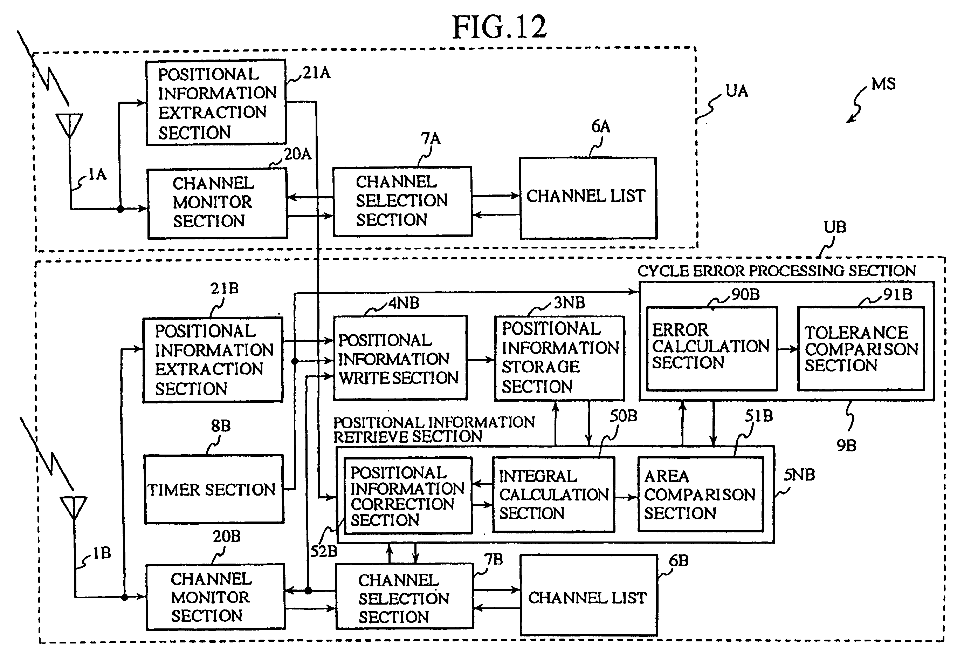

Fig. 12 is a block diagram showing an example of the arrangement of a mobile communication apparatus MS according to the present invention, wherein the apparatus is composed of a terrestrial-system unit UA for capturing terrestrial channels and a satellite-system unit UB for capturing satellite channels. It is to be noted that same reference numerals are put to the blocks corresponding to those shown in Fig. 2 in order to omit repetition of the same explanation. Further, either "A" or "B" is attached to the end portion of the reference code of each block so as to indicate to which of the units UA and UB it belongs.

The system configuration including the mobile communication apparatus MS shown in Fig. 12 is same as that shown in Fig. 2, and the apparatus MS can select and use one of the radio communication channels provided by the satellite system and those provided by the terrestrial communication system. In the present embodiment, however, the communication satellite SS shown in Fig. 1 is formed by a mobile satellite, and the satellite-system unit UB captures a communication channel provided by the mobile satellite SS.

The terrestrial-system unit UA is composed of a channel monitor section 20A, a positional information extraction section 21A, a channel list 6A and a channel selection section 7A, which is same as the configuration of the unit UA shown in Fig. 2.

The satellite-system unit UB is composed of an antenna section 1B, a channel monitor section 20B, a positional information extraction section 21B, a positional information storage section 3NB, a positional information write section 4NB, a positional information retrieve section 5NB, a channel list 6B, a channel selection section 7B, a timer section 8B and a cycle error storage processing section 9B. Compared with the unit UB shown in Fig. 2, the positional information storage section 3NB, the positional information write section 4NB and the positional information retrieve section 5NB are different, and the timer section 8B and the cycle error processing section 9B are newly added.

The timer section 8B is formed by a timer circuit that measures the lapse of time to output the exact time. The time output from the timer section 8B, however, may be the time that can be used only within the apparatus MS. For example, it can be the time on the basis of the reset time or power-on time. Although hour, minute and date (or month and date) are used in this embodiment, it can be arranged such that they are used together with the year data, or that only hour and minute are used, as the occasion demands.

The positional information write section 4NB writes into the positional information storage section 3NB the information of the satellite channel captured at the time of call-waiting together with the capture time thereof, on the basis of the output signal of the timer section 8B and of the channel selection section 7B. That is, when a communication channel whose channel state is good is found at the time of channel search, the channel selection section 7B sends a write request signal, together with the channel information thereof. The positional information write section 4NB writes the time output from the timer section 8B in association with the channel information and the positional information output from the positional information extraction section 21B into the positional information storage section 3NB.

The positional information storage section 3NB is a storage means for storing the time at which the communication channel is captured, in association with channel information and the positional information of the radio zone. The positional information storage section 3NB may be implemented by a writable storage means, that is, a volatile storage means such as a DRAM, SRAM or the like, or a nonvolatile storage means such as a flash memory, EPROM or the like.

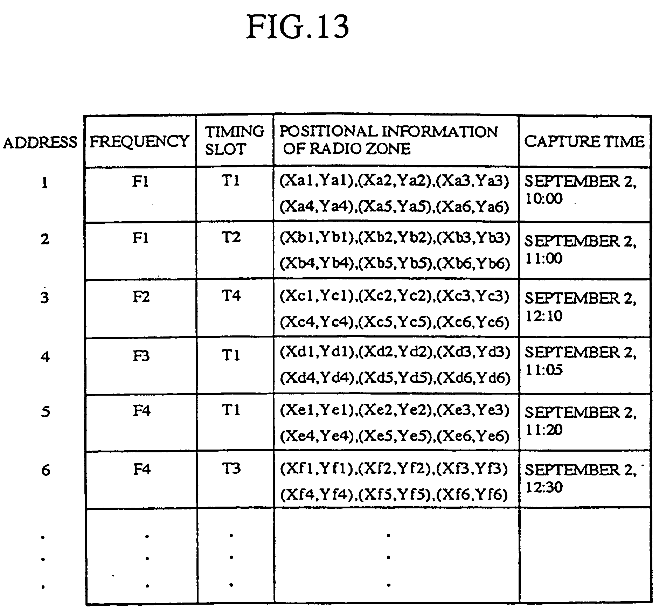

Fig. 13 is a table showing an example of the data arrangement stored in the positional information storage section 3NB. In the arrangement shown in the figure, for example, the capture time "September 2, 10:00 is stored in the same address (address 1) in association with the channel information [F1 - T1] and the positional information [(Xa1, Ya1). (Xa2, Ya2), ..., (Xa6, Ya6)].

The cycle error processing section 9B is composed of an error calculation section 90B and a tolerance comparison section 91B, and the cycle error is obtained on the basis of the capture time stored in the positional information storage section 3NB. The cycle error here means distance and direction from the position of the mobile satellite SS at the previous capture time to the current position thereof (relative position), and is obtained by the error calculation section 90B. Further, the tolerance comparison section 91B judges on the basis of the cycle error as to whether it is necessary to calculate the overlapped area of the positional information stored in association with the capture time.

The error calculation section 90B calculates the relative position of the mobile satellite SS on the basis of the lapse of time after the reception of a signal from the mobile satellite SS. When the error calculation section 90B receives the signal reception time from the positional information retrieve section 5NB, it calculates the time difference ·t between the signal reception time and the current time output from the timer section 8B, that is, the time lapse between the signal reception time and the current time. Thereafter, it calculates a cycle error corresponding to this time lapse with respect to the preliminarily provided rotation cycle (satellite cycle) T of the mobile satellite.

The cycle error will be the smaller one of the absolute values of {· t - T×n} and {·t - T(n+1)}, wherein the quotient obtained by dividing the time difference · t between the time of signal reception and the current time by the satellite cycle T is n. The direction of the communication satellite is represented by a code character of the cycle error, wherein in the former case, it will be a "positive" code indicating the same dissection as the shifting direction of the communication satellite, and in the latter case, it will be a "negative" code indicating the opposite direction to the shifting direction of the communication satellite.

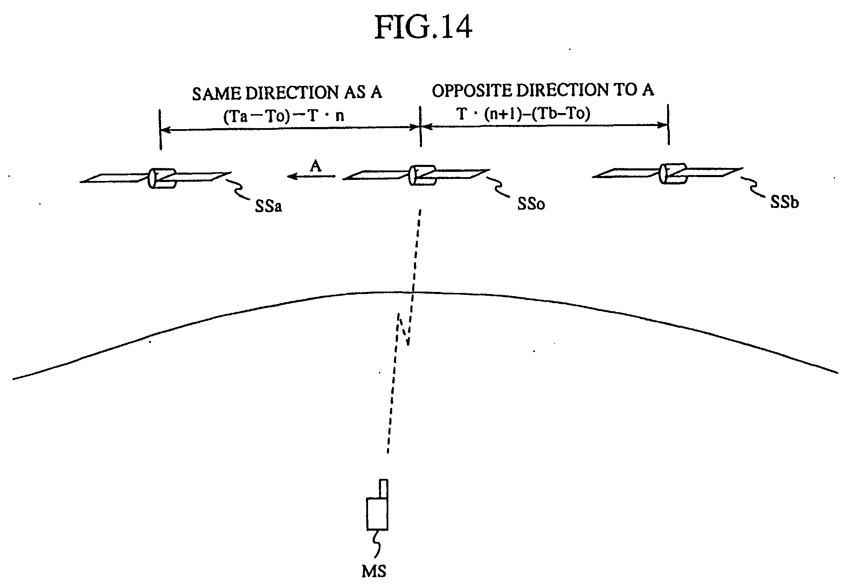

Fig. 14 is an explanatory view showing one example of the operation of the error calculation section 90B. The explanation here is on the assumption that the mobile communication apparatus MS received a radio signal at the time To from the communication satellite SSo which is moving toward the direction indicated by an arrow A.

Thereafter, at the time Ta, if the communication satellite is at the position indicated by SSa, the formula in this case will be {(Ta - To)- T×n}<{(T×(n+1)- (Ta-To)}, so that the cycle error will be {(Ta - To)- T×n}, that is, the distance to the communication satellite SSa will be {(Ta - To)- T×n}, and the direction will be same as the direction of A.

On the other hand, at the time Tb, if the communication satellite is at the position indicated by SSb, the formula in this case will be {(Tb - To)- T×n}>{(T×(n+1)-(Tb-To)), so that the cycle error will be {(Tb - To)- T×n}, that is, the distance to the communication satellite SSb will be {(Tb - To)- T×n}, and the direction will be opposite to the direction of A.

It should be noted that although the dimension of the above-mentioned cycle error is time, since the moving speed of the mobile satellite is determined in accordance with the satellite orbit (height) and the satellite cycle, the absolute value of the cycle error is equivalent to the distance between the communication satellites SSo and SSa, and the distance between the communication satellites SSo and SSb.

The tolerance comparison section 91B is a comparison circuit for comparing the absolute value of the cycle error obtained by the error calculation section 90B with a predetermined tolerance value, and judges whether overlapped area can be obtained by the integral calculation section 50B regarding the positional information of the radio zone associated with the signal reception time. That is, this tolerance value is predetermined as the range within which it can be corrected in the positional information correction section 52B.

As a result of the comparison, if the cycle error is within the range of tolerance, the obtained cycle error is output to the positional information retrieve section 51NB in order to correct the positional information. On the other hand, if the cycle error is out of the range of tolerance, a notice indicating "out of tolerance range" is output to the positional information retrieve section 5NB, as the overlapped area cannot be obtained.

The positional information retrieve section 5NB is configured by adding a positional information correction section 52B to the positional information retrieve section 5B, which retrieves the positional information stored in the positional information storage section 3NB, correcting at the same time the positional information of the radio zone, and outputs the channel information associated with the thus retrieved communication channel.

When the system switching from the terrestrial communication system to the satellite communication system is performed, the channel selection section 7B outputs a request for retrieval. The integral calculation section 50B receives the positional information of the radio zone of the terrestrial channel (first positional information) from the positional information extraction section 21A in response to this request signal, and reads out at the same time the positional information of the radio zone of the satellite channel (second positional information) from the positional information storage section 3B and the reception time associated therewith.

Thereafter, the integral calculation section 50B outputs the capture time to the cycle error processing section 9B, and receives either the obtained cycle error or the notice "out of tolerance". When it receives the notice "out of tolerance", it does not perform the integral calculation, and sets the overlapped area to "0". On the other hand, when it receives the cycle error, it outputs the second positional information and the cycle error to the positional information correction section 52B, receives the positional information after correction, and calculates the overlapped area of the radio zones of both systems on the basis of the first positional information and the second positional information after correction. In this way, it calculates the overlapped area of each of the second positional information stored in the positional information storage section 3NB with the first positional information.

The area comparison section 51B compares the overlapped areas obtained by the integral calculation section 50B mutually with each other, and on the basis of the thus obtained comparison result, it reads out the channel information from the positional information storage section 3B. That is, it finds out a radio zone whose overlapped area with the first positional information is the largest, and reads out the channel information of the communication channel corresponding to this radio zone, and outputs to the channel selection section 7B.

The positional information correction section 52B corrects the second positional information on the basis of the cycle error. That is, the positional information correction section 52B transforms the cycle error to the longitude and the latitude by use of the predetermined moving speed and direction of the mobile satellite SS. Thereafter, it adds the thus transformed values to each of the positional information forming the second positional information, that is, to the longitude and the latitude of each of the apexes, and corrects the positional information at the time of signal reception to the current positional information.

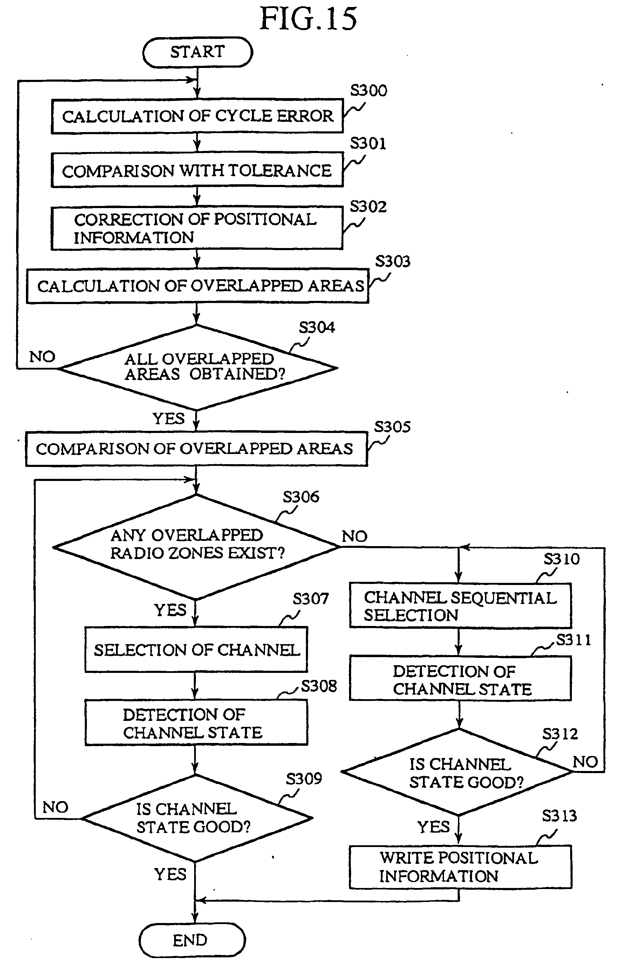

Fig. 15 is a flow chart of steps S300 to S313 showing an example of the operation of the satellite-system unit UB shown in Fig. 12, and showing the operation at the time of system switching from the terrestrial communication system to the satellite communication system. This process is executed when a system switching event is generated.

When the channel selection section 7B that has received the system switching event outputs a request for retrieval, the integral calculation section 50B receives the first positional information from the positional information extraction section 21A, and reads out also the second positional information from the positional information storage section 3B.

The cycle error calculation section 90B outputs a cycle error (S300) on the basis of the current time output from the thus read out signal reception time and the timer section 8. Thereafter, the tolerance comparison section 91B compares the absolute value of the cycle error and a predetermined tolerance, and outputs the cycle error (S301).

Thereafter, the positional information correction section 52B corrects the thus read out second positional information on the basis of the thus obtained cycle error (S302), and the integral calculation section 50B calculates the overlapped area of the corrected first positional information with the first positional information (S302).

In this way, the overlapped area of each of the second positional information stored in the positional information storage section 3NB with the first positional information are sequentially obtained (at the step S304), and the operation thereafter performed at steps S305 to 313 is same as that represented by steps S101 to S109 in the flowchart shown in Fig. 7.

By the way, the operation at the system switching from the satellite communication system to the terrestrial communication system is same as that represented by the flowchart shown in Fig. 8.

The second positional information stored in the positional information storage section 3NB are positional information obtained in the past (at the time of signal reception). Therefore, if the second radio communication system is a mobile satellite communication system, the current positional information is different from the stored positional information, so that the current overlapped area with the first positional information cannot be obtained.

However, the current overlapped area can be obtained by correcting the second positional information by use of the cycle error, and obtaining thereafter the overlapped area of each of the second positional information with the first positional information.

For this reason, according to the present embodiment, even though the mobile communication system is the second radio communication system (after switch system), at the time of system switching, a communication channel having the radio zone which is geographically nearest to the radio zone of the currently captured communication channel can be selected with priority. Therefore, the time required for channel search at the time of system switching to the mobile satellite communication system can be greatly reduced.

The present embodiment has been explained as to the case in which the positional information correction section 52B corrects the second positional information by use of the cycle error. However, it can also be arranged such that the first positional information is corrected in the opposite direction, and in both cases, the same overlapped area can be obtained by the integral calculation section 50B.

Further, the present embodiment has been explained as to the case in which the cycle error processing section 9B is provided with the tolerance comparison section 91B. However, if the tolerance range is sufficiently wide, it can be formed without the tolerance comparison section 91B, and can be arranged such that it outputs the cycle error the whole time instead.

Still further, the present embodiment has been explained as to the case in which the terrestrial-system unit UA is the unit for capturing terrestrial channels. However, it can be the unit for capturing satellite channels from a stationary satellite.

### (Fifth Embodiment)

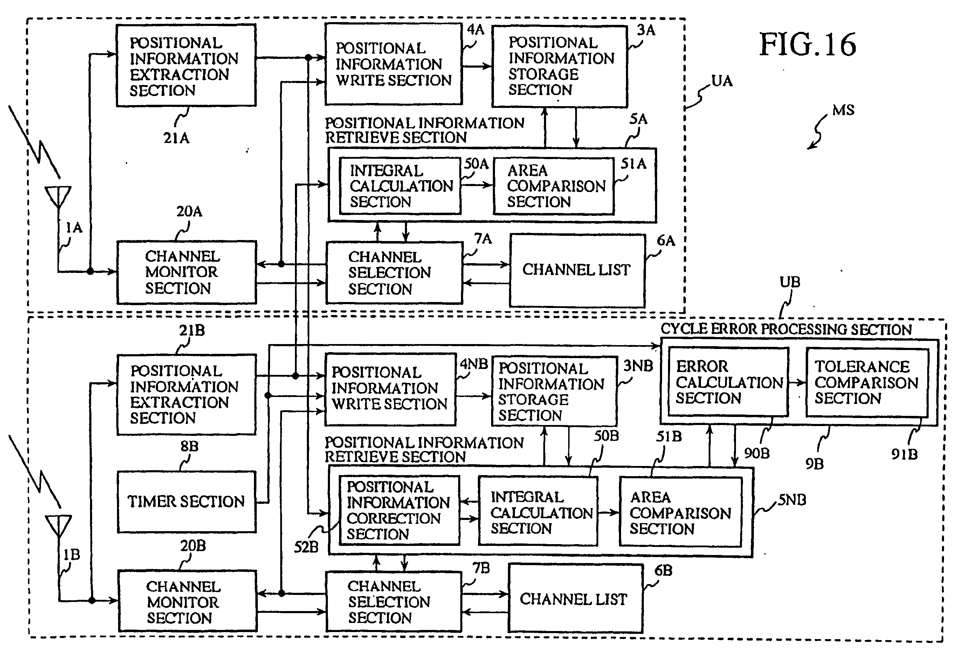

Fig. 16 is a block diagram showing an example of the arrangement of a mobile communication apparatus MS according to the present invention, wherein the unit UA in Fig. 12 is configured to be same as the unit UB in Fig. 2. However, in the present embodiment, as in the case of Fig. 12, the unit UA in Fig. 16 is the terrestrial-system unit that captures terrestrial channels, whereas the unit UB is the satellite-system unit that captures satellite channels from a mobile satellite.

In this embodiment, for operating the system switching from the terrestrial communication system to the satellite communication system, just as the case of the fourth embodiment, the time required for channel search at the time of system switching to the mobile satellite communication system can be greatly reduced. Further, for system switching from the satellite communication system to the terrestrial communication system as well, samely as the case of the first and second embodiments, the time required for channel search at the time of system switching from the mobile satellite communication system can be greatly reduced.

## Claims

1. A radio communication system switching method, comprising the steps of:
first extractingstep for extracting positional information of a radio zone provided by a first radio communication system from a radio signal received within the radio zone currently serving a mobile station (MS) for which a channel is to be selected,
storing positional information of two or more radio zones provided by a second radio communication system in association with the channel information of the respective radio zones,
calculating overlapped area (S100) of each of the radio zones stored by said storing step with the radio zone extracted by said first extracting step, and
selecting a radio communication channel (S103) provided by said second radio communication system which generated the bigest ovedapped area (S101) obtained by said area calculating step (S100), proceeding to the second radio communication system which generated the next largest overlapped area obtained by said area calculating step in a stepwise manner, until a good radio communication channel is found.

2. The radio communication system switching method according to claim 1, further comprising the steps of
a second extracting step for extracting positional information of a radio zone from a radio signal received within the radio zone, said radio zone being provided by a second radio communication system using a mobile satellite rotating along the orbit which is lower than the orbit of a stationary satellite,
storing positional information of two or more radio zones extracted by said second extracting step, in association with the reception time and the channel information of said radio zone,
calculating the difference between the reception time stored in said storing step and the current time, and obtaining a cycle error (S300) corresponding to the calculated difference with respect to the satellite cycles
wherein the calculation of the ovedapped area (S303) of said radio zones extracted in the first extracting step currently serving the mobile station (MS), is performed with the current position of the radio zones provided by the second radio communication system calculated by combining the speed and moving direction of the satellite with the time difference between said storing step and current time (S302).

3. A radio communication system switching method according to claim 2, wherein said overlapping area calculating step further comprises the step of comparing (S301) the cycle error obtained in said difference obtaining step with a predetermined tolerance value, and the overlapped area is obtained if this said cycle error lies below the said predetermined tolerance, value.

4. A mobile communication apparatus comprising
a first extraction means for extracting positional information (21B) of a radio zone provided by a first radio communication system from a radio signal received within the radio zone currently serving the mobile communication apparatus for which a channel is to be selected,
a storage means for storing positional information (21A) of two or more than two radio zones provided by a second radio communication system in association with the channel information (20A) of the respective radio zones,
an area calculation means (5B) for calculating ovedapped area of each of the radio zones stored in said storage means (3B) with the radio zone extracted by said first extraction means, and
a channel selection means (7B) for selecting a radio communication channel provided by said second radio communication system from the radio zone giving the largest overlapped area obtained by said area calculation means (5b), proceeding to the radio zone with the next largest overlapped area obtaining by said area calculation means in a stepwise manner until a good radio communication channel is secured.

5. The mobile communication apparatus according to claim 4, further comprising
a second extraction means for extracting positional information (21 B) of a radio zone from a radio signal received within the radio zone, said radio zone being provided by a second radio communication system using a mobile satellite rotating along the orbit which is lower than the orbit of a stationary satellite,
a storage means for storing positional information (3NB) of two or more radio zones extracted by said second extraction means(21B), in association with the reception time and the channel information of said radio zone,
an error calculation means (90B) for calculating the difference between the reception time stored in said storage means (3NB) and the current time, and obtaining a cycle error corresponding to the calculated difference with respect to the satellite cycle,
wherein the area calculation means (5NB) are for calculating the overlapped area of said radio zone extracted in the first extracting step currently serving the mobile station (MS), with the current position of the radio zone provided by the second radio communication system, calculated by combining the speed and moving direction of the satellite with the time difference between said storing step and current time.

6. A mobile communication apparatus according to claim 5, wherein said area calculation means (5NB) further comprises an error comparison means (91B) for comparing the cycle error obtained in said error calculation means (90B) with a predetermined tolerance value, and calculation of the overlapped area if this said cycle error lies below said predetermined tolerance value.

## Patentansprüche

1. Schaltverfahren für ein Funkverbindungssystem, das die folgenden Schritte umfasst:
einen ersten Extraktionsschritt, um Positionsinformation eines Funkbereichs zu extrahieren, die durch ein erstes Funkverbindungssystem aus einem Funksignal bereitgestellt wird, das in dem Funkbereich empfangen wurde, der momentan eine Mobilstation (MS) versorgt, für welche ein Kanal ausgewählt werden soll,
Abspeichern von Positionsinformation zweier oder mehrerer Funkbereiche, die durch ein zweites Funkverbindungssystem in Zusammenhang mit der Kanalinformation der jeweiligen Funkbereiche bereitgestellt wird,
Berechnen eines Überlappungsgebiets (S100) für jeden der Funkbereiche, die durch den Speicherschritt abgespeichert wurden, wobei der Funkbereich durch den ersten Extraktionsschritt extrahiert wurde, und
Auswählen eines Verbindungskanals (S103), der durch das zweite Funkverbindungssystem bereitgestellt wird, das das größte Überlappungsgebiet (S101) bildet, das durch den Gebietsberechnungsschritt (S100) ermittelt wurde, Übergehen zum zweiten Funkverbindungssystem, das das nächstgrößte Überlappungsgebiet bildet, das durch den Gebietsberechnungsschritt schrittweise ermittelt wurde, bis ein guter Funkverbindungskanal gefunden wird.

2. Schaltverfahren nach Anspruch 1, für ein Funkverbindungssystem, darüber hinaus die folgenden Schritte umfassend:
einen zweiten Extraktionsschritt zum Extrahieren von Positionsinformation eines Funkbereichs aus einem Funksignal, das in dem Funkbereich empfangen wurde, wobei der Funkbereich durch ein zweites Funkverbindungssystem bereitgestellt wird, das sich eines mobilen Satellits bedient, der entlang einer Umlaufbahn kreist, die niedriger ist als die Umlaufbahn eines stationären Satellits,
Abspeichern von Positionsinformation zweier oder mehrerer Funkbereiche, die durch den zweiten Extraktionsschritt extrahiert wurden, zusammen mit der Empfangszeit und der Kanalinformation des Funkbereichs,
Berechnen der Differenz zwischen der im Speicherschritt abgespeicherten Empfangszeit und der momentanen Zeit, und Ermitteln eines Zyklusfehlers (S300), der der berechneten Differenz im Hinblick auf den Satellitenzykus entspricht,
wobei die Berechnung des Überlappungsgebiets (S303) der im ersten Extraktionsschritt extrahierten Funkbereiche, die die Mobilstation (MS) momentan bedienen, mit der momentanen Position der durch das zweite Funkverbindungssystem bereitgestellten Funkbereiche durchgeführt wird, die dadurch berechnet wird, dass die Geschwindigkeit und Bewegungsrichtung des Satellits mit der Zeitdifferenz zwischen dem Speicherschritt und der momentanen Zeit kombiniert wird (S302).

3. Schaltverfahren nach Anspruch 2, für ein Funkverbindungssystem,
wobei der Berechnungsschritt für das Überlappungsgebiet darüber hinaus den Schritt des Vergleichens (S301) des im Differenzermittlungsschritt ermittelten Zyklusfehlers mit einem vorbestimmten Toleranzwert umfasst, und das Überlappungsgebiet erhalten wird, wenn dieser Zyklusfehler unterhalb des vorbestimmten Toleranzwerts liegt.

4. Mobile Verbindungsvorrichtung, Folgendes umfassend:
eine erste Extraktionseinrichtung, um Positionsinformation (21 B) eines Funkbereichs zu extrahieren, die durch ein erstes Funkverbindungssystem aus einem Funksignal bereitgestellt wird, das in dem Funkbereich empfangen wurde, der momentan die mobile Verbindungsvorrichtung versorgt, für welche ein Kanal ausgewählt werden soll,
eine Speichereinrichtung zum Abspeichern von Positionsinformation (21A) von zwei oder mehr als zwei Funkbereichen, die durch ein zweites Funkverbindungssystem in Zusammenhang mit der Kanalinformation (20A) der jeweiligen Funkbereiche bereitgestellt wird,
eine Gebietsberechnungseinrichtung (5B) zum Berechnen eines Überlappungsgebiets für jeden der in der Speichereinrichtung (3B) abgespeicherten Funkbereiche, wobei der Funkbereich durch die erste Extraktionseinrichtung extrahiert wurde, und
eine Kanalauswahleinrichtung (7B) zum Auswählen eines Funkverbindungskanals, der durch das zweite Funkverbindungssystem bereitgestellt wird, das das größte Überlappungsgebiet angibt, das durch die Gebietsberechnungseinheit (5b) ermittelt wurde, Übergehen zu dem Funkbereich mit dem nächstgrößten Überlappungsgebiet, das durch die Gebietsberechnungseinrichtung schrittweise ermittelt wurde, bis ein guter Funkverbindungskanal festgestellt wird.

5. Mobile Verbindungsvorrichtung nach Anspruch 4, darüber hinaus umfassend:
eine zweite Extraktionseinrichtung zum Extrahieren von Positionsinformation (21B) eines Funkbereichs aus einem Funksignal, das in dem Funkbereich empfangen wurde, wobei der Funkbereich durch ein zweites Funkverbindungssystem bereitgestellt wird, das sich eines mobilen Satellits bedient, der entlang einer Umlaufbahn kreist, die niedriger ist als die Umlaufbahn eines stationären Satellits,
eine Speichereinrichtung zum Abspeichern von Positionsinformation (3NB) zweier oder mehrerer Funkbereiche, die durch die zweite Extraktionseinrichtung (21B) extrahiert wurden, zusammen mit der Empfangszeit und der Kanalinformation des Funkbereichs,
eine Fehlerberechnungseinrichtung (90B) zum Berechnen der Differenz zwischen der in der Speichereinrichtung (3NB) abgespeicherten Empfangszeit und der momentanen Zeit, und Ermitteln eines Zyklusfehlers, der der berechneten Differenz im Hinblick auf den Satellitenzykus entspricht,
wobei die Gebietsberechnungseinrichtung (5NB) zum Berechnen des Überlappungsgebiets des im ersten Extraktionsschritt extrahierten Funkbereichs, der die Mobilstation (MS) momentan versorgt, mit der momentanen Position des durch das zweite Funkverbindungssystem bereitgestellten Funkbereichs bestimmt ist, der dadurch berechnet wird, dass die Geschwindigkeit und Bewegungsrichtung des Satellits mit der Zeitdifferenz zwischen dem Speicherschritt und der momentanen Zeit kombiniert wird.

6. Mobile Verbindungsvorrichtung nach Anspruch 5,
wobei die Gebietsberechnungseinrichtung (5NB) darüber hinaus eine Fehlervergleichseinrichtung (91B) umfasst, um den in der Fehlerberechnungseinrichtung (90B) ermittelten Zyklusfehler mit einem vorbestimmten Toleranzwert zu vergleichen, und zir Berechnung des Überlappungsgebiets, wenn der Zyklusfehler unter dem vorbestimmten Toleranzwert liegt.

## Revendications

1. Méthode de commutation de système de communication par radio comprenant les étapes :
d'une première étape d'extraction pour extraire une information de position d'une zone radio couverte par un premier système de communication par radio d'un signal radio reçu dans la zone radio servant actuellement une station mobile (MS) pour laquelle un canal doit être sélectionné,
de stocker l'information de position de deux zones radio ou plus couvertes par un deuxième système de communication par radio en association avec l'information de canal des zones radio respectives,
de calculer la zone de superposition (S100) de chacune des zones radio stockées au cours de ladite étape de stockage avec la zone radio extraite par ladite première étape d'extraction, et
de sélectionner un canal de communication par radio (S103) fourni par ledit deuxième système de communication par radio qui génère la zone de superposition la plus grande (S101) obtenue par ladite étape de calcul de zone (S100), poursuivre avec le deuxième système de communication par radio qui génère la zone de superposition de taille directement inférieure obtenue par pas par ladite étape de calcul de zone, jusqu'à ce qu'un bon canal de communication par radio soit trouvé.

2. Méthode de commutation de système de communication par radio selon la revendication 1, comprenant en outre les étapes :
d'une deuxième étape d'extraction pour extraire une information de position d'un signal radio reçu dans la zone radio, ladite zone radio étant couverte par un deuxième système de communication utilisant un satellite mobile tournant sur une orbite plus basse que l'orbite d'un satellite stationnaire,
de stocker l'information de position de deux zones radio ou plus extraites par ladite deuxième étape d'extraction, en association avec l'heure de réception et l'information de canal de ladite zone radio,
de calculer la différence entre l'heure de réception stockée par ladite étape de stockage et l'heure actuelle et d'obtenir une erreur de cycle (S300) correspondant à la différence calculée par rapport au cycle du satellite,
où le calcul de la zone de superposition (S303) desdites zones radio extraites par la première étape d'extraction servant actuellement la station mobile (MS) est réalisé avec la position actuelle des zones radio couvertes par le deuxième système de communication par radio calculée en combinant la vitesse et la direction de déplacement du satellite avec la différence d'heure entre ladite étape de stockage et l'heure actuelle (S302).

3. Méthode de commutation de système de communication par radio selon la revendication 2, dans laquelle ladite étape de calcul de zone de superposition comprend en outre l'étape de comparaison (S301) de l'erreur de cycle obtenue au cours de ladite étape d'obtention de différence à une valeur de tolérance prédéterminée et où la zone de superposition est obtenue si ladite erreur de cycle est inférieure à ladite valeur de tolérance prédéterminée.

4. Appareil de communication mobile comprenant :
un premier moyen d'extraction pour extraire une information de position (21B) d'une zone radio couverte par un premier système de communication par radio d'un signal radio reçu dans la zone radio servant actuellement l'appareil de communication mobile pour lequel un canal doit être sélectionné,
un moyen de stockage pour stocker l'information de position (21A) de deux zones radio ou plus couvertes par un deuxième système de communication par radio en association avec l'information de canal (20A) des zones radio respectives,
un moyen de calcul de zone (5B) pour calculer la zone de superposition de chacune des zones radio stockées par ledit moyen de stockage (3B) avec la zone radio extraite par ledit premier moyen d'extraction, et
un moyen de sélection de canal (7B) pour sélectionner un canal de communication par radio fourni par ledit deuxième système de communication par radio de la zone radio produisant la zone de superposition la plus grande par ledit moyen de calcul de zone (5B), poursuivre avec la zone radio qui génère la zone de superposition de taille directement inférieure obtenue par pas par ledit moyen de calcul de zone, jusqu'à ce qu'un bon canal de communication par radio soit assuré.

5. Appareil de communication mobile selon la revendication 4, comprenant en outre :
un deuxième moyen d'extraction pour extraire une information de position (21B) d'une zone radio d'un signal radio reçu dans la zone radio, ladite zone radio étant couverte par un deuxième système de communication utilisant un satellite mobile tournant sur une orbite plus basse que l'orbite d'un satellite stationnaire,
un moyen de stockage pour stocker l'information de position (3NB) de deux zones radio ou plus extraites par ledit deuxième moyen d'extraction (21B), en association avec l'heure de réception et l'information de canal de ladite zone radio,
un moyen de calcul d'erreur (90B) pour calculer la différence entre l'heure de réception stockée par ledit moyen de stockage (3NB) et l'heure actuelle et obtenir une erreur de cycle correspondant à la différence calculée par rapport au cycle du satellite,
où les moyens de calcul (5NB) doivent calculer la zone de superposition de ladite zone radio extraite au cours de la première étape d'extraction servant actuellement la station mobile (MS) avec la position actuelle de la zone radio couverte par le deuxième système de communication par radio calculée en combinant la vitesse et la direction de déplacement du satellite avec la différence d'heure entre ladite étape de stockage et l'heure actuelle.

6. Appareil de communication mobile selon la revendication 5, dans lequel ledit moyen de calcul de zone (5NB) comprend en outre un moyen de comparaison d'erreur (91B) pour comparer l'erreur de cycle obtenue par ledit moyen de calcul d'erreur (90B) à une valeur de tolérance prédéterminée et calculer la zone de superposition si ladite erreur de cycle est inférieure à ladite valeur de tolérance prédéterminée.
